## Europäisches Patentamt
## European Patent Office
## Office européen des brevets

(11) Veröffentlichungsnummer: **0 218 075 B1**

## EUROPÄISCHE PATENTSCHRIFT

(45) Veröffentlichungstag der Patentschrift: **11.12.91**

(51) Int. Cl.⁵: **B25J 9/04**, B25J 19/00

(21) Anmeldenummer: **86111807.3**

(22) Anmeldetag: **26.08.86**

(54) **Gelenkroboter.**

(30) Priorität: **10.09.85 DE 3532252**

(43) Veröffentlichungstag der Anmeldung:
**15.04.87 Patentblatt 87/16**

(45) Bekanntmachung des Hinweises auf die
Patenterteilung:
**11.12.91 Patentblatt 91/50**

(84) Benannte Vertragsstaaten:
**DE FR IT SE**

(56) Entgegenhaltungen:
**EP-A- 0 044 548      EP-A- 0 054 763**
**EP-A- 0 140 659      WO-A-86/04009**
**DE-A- 2 249 894      FR-A- 2 551 378**
**GB-A- 2 134 074**

(73) Patentinhaber: **SIEMENS AKTIENGESELL-**
**SCHAFT**
**Wittelsbacherplatz 2**
**W-8000 München 2(DE)**

(72) Erfinder: **Kleemann, Robert**
**Volckamer Strasse 9**
**W-8520 Erlangen(DE)**
Erfinder: **Keppler, Rainer**
**Jahnstrasse 48**
**W-8521 Poxdorf(DE)**

## Beschreibung

Die Erfindung bezieht sich auf einen Gelenkroboter. In zunehmendem Maße werden heute für die automatisierte Fertigung Montageroboter eingesetzt. Nähere Ausführungen über die technischen Anforderungen an derartige Montageroboter finden sich beispielsweise in der VDI-Zeitschrift 1981, Seiten 763 bis 772 und 790 bis 796.

Damit Montageroboter schnell arbeiten können, sollten die Drehmassen möglichst nah am Drehmittelpunkt angeordnet sein, so daß keine zu hohen Trägheitsmomente auftreten. Dies hat aber andererseits wieder bei Gelenkrobotern zur Folge, daß unter Umständen hierdurch die möglichen Schwenkwinkel begrenzt werden.

Für Montagearbeiten sind aber andererseits sehr häufig große Dreh- und Schwenkwinkel erforderlich.

Aus der Druckschrift EP-A-044 548 ist ein Gelenkroboter mit folgenden Merkmalen bekannt:

a) für die Drehgelenke sind elektrische Einzelantriebe vorgesehen,

b) an ein erstes Drehgelenk mit einem Turm und mit einem im Turm liegenden Antriebsmotor schließt sich ein hierzu im rechten Winkel orientiertes zweites Drehgelenk - mit ebenfalls im Turm liegenden Motor - an, durch das ein erstes Armteil um eine zwischen seinen Enden liegende Drehachse schwenkbar ist.

c) an einem Ende des ersten, als Doppelarm ausgebildeten Armteiles ist ein drittes Drehgelenk angeordnet, durch das ein zweites Armteil in einer Parallelebene zwischen dem Doppelarm schwenkbar ist und

d) an dem, dem dritten Drehgelenk entgegengesetzten Ende des ersten Armteiles sind die Antriebe des dritten und eines vierten Gelenkes angeordnet.

Ferner liegt die Schwenkebene des zweiten Armteiles in etwa radial zur Drehachse des ersten Drehgelenkes.

Durch die Unterbringung von Antrieben im Turm befinden sich diese Antriebe außerhalb des Schwenkbereiches des ersten Armteiles.

Ergänzend sei auch in diesem Zusammenhang bemerkt, daß es an sich bei Robotern bekannt ist, zentrisch zur Drehachse des ersten Drehgelenks einen feststehenden Zahnkranz anzuordnen, auf dem sich das Ritzel eines außenliegenden Antriebsmotors abwälzt. (GB-A2 135 230)

Die Aufgabe der vorliegenden Erfindung besteht darin, die bekannten Konstruktionen so zu verbessern, daß die Forderungen nach gutem Massenausgleich und großem Schwenkwinkel in den Grundachsen optimal miteinander vereinbar sind. Diese Aufgabe wird durch einen Gelenkroboter mit folgenden Merkmalen gelöst:

Gelenkroboter, bei dem

a) für die Drehgelenke Einzelantriebe vorgesehen sind,

b) sich an ein erstes Drehgelenk mit einem um seine Längsachse drehbaren Ständer und einen parallel zum Ständer angeordneten Antriebsmotor ein hierzu im rechten Winkel orientiertes zweites Drehgelenk anschließt, durch das ein erstes Armteil verschwenkbar ist,

c) an einem Ende des ersten Armteiles ein drittes Drehgelenk angeordnet ist, durch das ein zweites Armteil relativ zum ersten Armteil in einer Parallelebene schwenkbar ist,

d) an dem, dem dritten Drehgelenk entgegengesetzten Ende des ersten Armteiles die Antriebe des zweiten und dritten Drehgelenkes angeordnet sind,

e) das zweite Drehgelenk in etwa in der Mitte des ersten Armteiles einschließlich der Antriebe liegt und

f) der dem ersten Drehgelenk zugeordnete außenliegende Antriebsmotor fest mit dem Ständer verbunden ist und gegenüber dem ersten und zweiten Armteil derart liegt, daß er ständig aus dem Schwenkbereich der Armteile verfahren wird.

Auf diese Weise ist eine hohe Dynamik der Bewegung mit großen Schwenkwinkeln vereinbar.

Zur weiteren Verringerung von Massenträgheiten ist vorteilhafterweise die Konstruktion so getroffen, daß das zweite und dritte Drehgelenk auf der gleichen Seite des ersten Anteiles liegen und die Schwenkebene des zweiten Armteiles in etwa radial zur Drehachse des ersten Drehgelenkes liegt. Weitere vorteilhafte Ausgestaltungen der Erfindung sind in den übrigen Unteransprüchen beschrieben.

Anhand eines in der Zeichnung dargestellten Ausführungsbeispiels sei die Erfindung näher beschrieben; es zeigen:

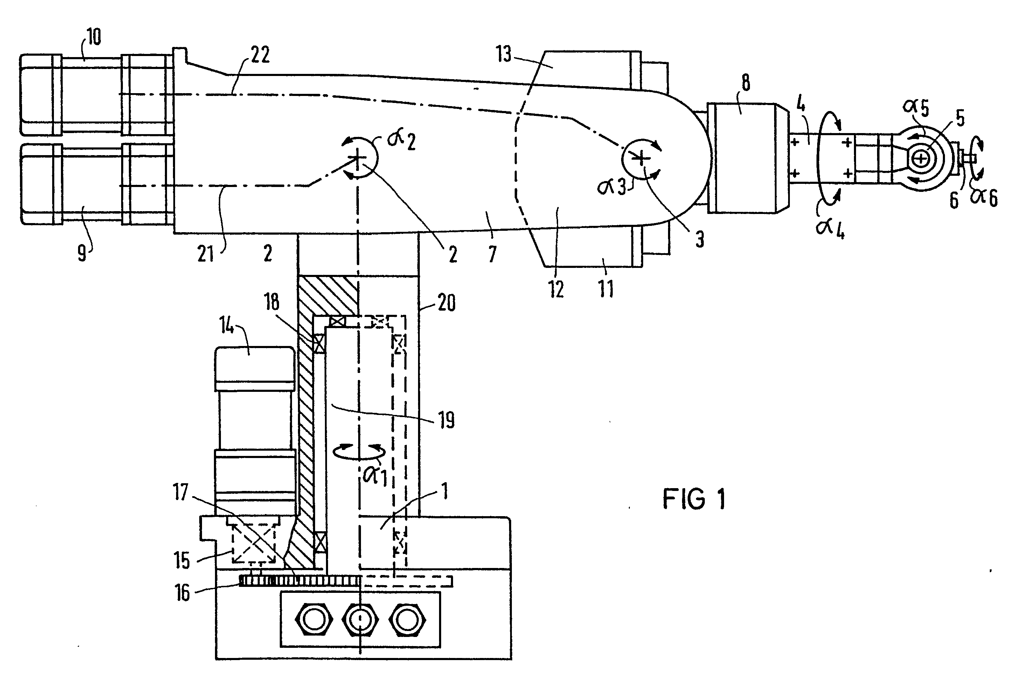

Figur 1      eine schematische Seitenansicht eines Gelenkroboters

Figur 2      eine Draufsicht.

Wie aus der Zeichnung ersichtlich, besteht der Gelenkroboter aus den sechs Drehgelenken 1 bis 6, über die Schwenkungen mit den Winkeln $\alpha 1$ bis $\alpha 6$ möglich sind.

Das erste Drehgelenk 1 besteht aus einem Sockel mit darauffolgendem Turm 19, auf dem der drehbare Ständer 20 des Drehgelenkes 1 mit Lagern 18 schwenkbar gelagert ist.

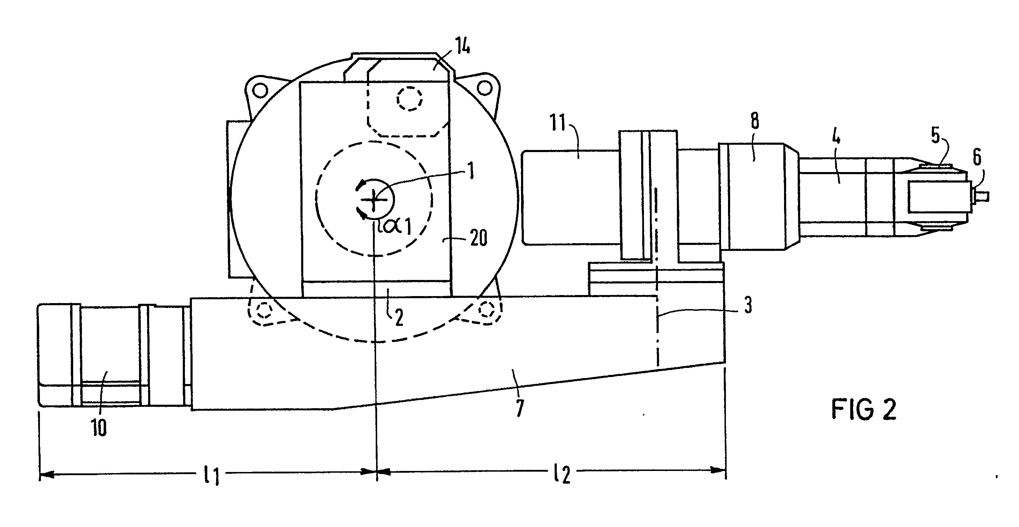

Zum Antrieb des Drehgelenkes 1 dient ein Elektromotor 14, der parallel zum Ständer 20 angeordnet und fest mit diesem verbunden ist. Dieser Motor 14 treibt über ein Getriebe 15 ein Ritzel 16. Dieses Ritzel 16 wälzt sich mitsamt dem Motor auf einem im Sockel angeordneten zentrischen Zahnkranz 17 ab. Hierdurch wird der Motor 14 mitsamt dem Ständer 20 relativ zum feststehenden Zahnkranz 17, d.h. zum feststehenden Teil des Drehgelenkes 1 in Richtung des Doppelpfeiles α1 verschwenkt. Auf das Drehgelenk 1 folgt ein hierzu im rechten Winkel orientiertes Drehgelenk 2, das in etwa in der Mitte des ersten Armteiles 7 liegt, wie insbesondere die Längen 11 und 12 aus Figur 2 erkennen lassen. Das Drehgelenk 2 umfaßt z.B. ebenfalls einen fest mit dem Ständer 20 verbundenen Zahnkranz, auf dem sich ein vom zugeordneten Antriebsmotor 9 über ein Winkelgetriebe angetriebenes Ritzel zur Schwenkung des Armteiles 7 abwälzt. Die Verbindung von Motor 9 zum Drehgelenk 2 ist dabei durch die gestrichelte Linie 21 angedeutet. Parallel neben dem Motor 9 liegt in der Verlängerung des Armteiles 7 der elektrische Antriebsmotor 10 für den Antrieb des Drehgelenkes 3 mit dem Schwenkwinkel α 3. Hier ist die Verbindung ebenfalls gestrichelt durch die Linie 22 angedeutet.

An das Ende des Armteiles 7 ist über das Drehgelenk 3 ein zweiter Armteil 8 angekuppelt, der die Drehgelenke 4 bis 6 enthält, sowie deren zugehörige Antriebsmotoren 11, 12, und 13, die parallel nebeneinander am einen Ende des Armteiles 8 angeordnet sind.

Wie aus den Zeichnungen ersichtlich, sind die Armteile so in bezug aufeinander und die Drehgelenke angeordnet, daß ein weitgehender Massenausgleich möglich ist, zum Beispiel ein statischer Massenausgleich bis zu einem Drittel. Wie auch aus der Zeichnung ersichtlich, kann trotz des relativ mittig angeordneten Drehgelenkes 2 der Armteil 7 nahezu beliebig verschwenkt werden, ohne daß es zu Kollisionen mit dem Motor 14 kommt, da dieser bei der Drehung des Drehgelenkes 1 immer mitgenommen wird und so stets außerhalb des Schwenkbereiches des Armteiles 7 gehalten werden kann.

**Patentansprüche**

1. Gelenkroboter, bei dem
   a) für die Drehgelenke Einzelantriebe (9, 10, 14) vorgesehen sind,
   b) sich an ein erstes Drehgelenk (1) mit einem um seine Längsachse drehbaren Ständer (20) und einen parallel zum Ständer (20) angeordneten Antriebsmotor (14) ein hierzu im rechten Winkel orientiertes zweites Drehgelenk (2) anschließt, durch das ein erstes Armteil (7) verschwenkbar ist,
   c) an einem Ende des ersten Armteiles (7) ein drittes Drehgelenk (3) angeordnet ist, durch das ein zweites Armteil (8) relativ zum ersten Armteil in einer Parallelebene schwenkbar ist,
   d) an dem, dem dritten Drehgelenk (3) entgegengesetzten Ende des ersten Armteiles (7) die Antriebe (9, 10) des zweiten und dritten Drehgelenkes angeordnet sind,
   e) das zweite Drehgelenk in etwa in der Mitte des ersten Armteiles (7) einschließlich der Antriebe (9, 10) liegt und
   f) der dem ersten Drehgelenk (1) zugeordnete außenliegende Antriebsmotor (14) fest mit dem Ständer (20) verbunden ist und gegenüber dem ersten und zweiten Armteil (7, 8) derart liegt, daß er ständig aus dem Schwenkbereich der Armteile (7, 8) verfahren wird.

2. Gelenkroboter nach Anspruch 1, **gekennzeichnet durch** folgende Merkmale:
   a) das zweite und dritte Drehgelenk (2, 3) liegen auf der gleichen Seite des ersten Armteiles (7) und
   b) die Schwenkebene des zweiten Armteiles (8) liegt in etwa radial zur Drehachse des ersten Drehgelenks (1).

3. Gelenkroboter nach Anspruch 1, **durch gekennzeichnet,** daß die Massenverteilung in bezug auf das zweite und dritte Drehgelenk (2, 3) jeweils im Sinne eines mindestens 30%igen statischen Gewichtsausgleiches gewählt ist.

4. Gelenkroboter nach Anspruch 1, **dadurch gekennzeichnet,** daß zentrisch zur Drehachse des ersten Drehgelenks (1) ein feststehender Zahnkranz (17) angeordnet ist, auf dem sich das Ritzel (16) des Antriebsmotors (14) abwälzt.

**Claims**

1. Articulated robot, in which
   a) single drives (9, 10, 14) are provided for the rotary joints,
   b) there is attached to a first rotary joint (1) with a stand (20) rotatable around its longitudinal axis and to a drive motor (14) arranged parallel to the stand (20) a second rotary joint (2) oriented moreover in the right angle, by means of which rotary joint a first arm part (7) can be swung horizontally,
   c) at one end of the first arm part (7) a third rotary joint (3) is arranged, by means of which a second arm part (8) can be swung relative to the first arm part in a parallel plane,
   d) at the end of the first arm part (7) opposite the third rotary joint (3) there are arranged the drives (9, 10) of the second and third rotary joint,
   e) the second rotary joint lies approximately in the middle of the first arm part (7) including the drives (9, 10) and

f) the outer-lying drive motor (14) associated with the first rotary joint (1) is firmly connected to the stand (20) and lies opposite the first and second arm part (7, 8) in such a way that it is constantly transported out of the swinging region of the arm parts (7, 8).

2. Articulated robot according to claim 1, characterized by the following features:
   a) the second and third rotary joints (2, 3) lie on the same side of the first arm part (7) and
   b) the swinging plane of the second arm part (8) lies approximately radially to the axis of rotation of the first rotary joint (1).

3. Articulated robot according to claim 1, characterized in that the mass distribution with reference to the second and third rotary joint (2, 3) is chosen in the sense of at least a 30 % static weight balance respectively.

4. Articulated robot according to claim 1, characterized in that centrally to the axis of rotation of the first rotary joint (1) there is arranged a stationary annular gear (17), round which the pinion (16) of the drive motor (14) rolls.

**Revendications**

1. Robot articulé, dans lequel
   a) pour les articulations de rotation, il est prévu des dispositifs individuels d'entraînement (9,10,14),
   b) à une première articulation de rotation (1) possédant un support (20) tournant autour de son axe longitudinal et à un moteur d'entraînement (14) disposé parallèlement au support (20), fait suite une seconde articulation de rotation (2) orientée perpendiculairement et apte à faire pivoter un premier élément de bras (7),
   c) sur une extrémité du premier élément de bras (7) est montée une troisième articulation de rotation (3), qui peut faire pivoter un second élément de bras (8) par rapport au premier élément de bras, dans un plan parallèle,
   d) sur l'extrémité du premier élément de bras (7), tournée à l'opposé de la troisième articulation(3), sont montés les dispositifs d'entraînement (9,10) des seconde et troisième articulations de rotation,
   e) la seconde articulation de rotation est disposée approximativement au centre du premier élément de bras (7) y compris les dispositifs d'entraînement (9,10), et

f) le moteur d'entraînement (14), situé à l'extérieur et associé à la première articulation de rotation (1), est relié rigidement au support (20) et est disposé par rapport aux premier et second éléments de bras (7,8) de manière à être déplacé en permanence hors de la zone de pivotement des éléments de bras (7,8).

2. Robot articulé suivant la revendication 1, caractérisé par les dispositions suivantes:
   a) les seconde et troisième articulations de rotation (2,3) sont situées du même côté du premier élément de bras (7), et
   b) le plan de pivotement du second élément de bras (8) est disposé approximativement radialement par rapport à l'axe de rotation de la première articulation de rotation (1).

3. Robot articulé suivant la revendication 1, caractérisé par le fait que la répartition des masses en rapport avec les seconde et troisième articulations de rotation (2,3) est choisie respectivement dans le sens de l'obtention d'un équilibrage statique de poids à au moins 30 %.

4. Robot articulé suivant la revendication 1, caractérisé par le fait qu'une couronne dentée fixe (17), sur laquelle roule le pignon (16) du moteur d'entraînement (14), est montée d'une manière centrée par rapport à l'axe de rotation de la première articulation de rotation (1).

FIG 1

FIG 2

EP 0 218 075 B1